# EUROPÄISCHE PATENTANMELDUNG

(11) **EP 2 444 196 A1**
(43) Veröffentlichungstag der Anmeldung: **25.04.2012**
(21) Anmeldenummer: 11185616.7
(22) Anmeldetag: 18.10.2011
(51) Int. Cl.: B23K 37/00, B23K 9/32, B21D 3/10, B21D 3/16

(54) **Einstellvorrichtung für Brenner mit einer Hebelübersetzer**

(30) Priorität: 25.10.2010 DE 102010049260
(71) Anmelder: TBi Industries GmbH, 35463 Fernwald (DE)
(72) Erfinder:

(57) **Zusammenfassung**

Die Erfindung betrifft eine Einstellvorrichtung für Brenner (1), insbesondere Roboterschweißbrenner (1), welche durch Nutzung einer Hebelübersetzung (7,8) die zum genauen Einstellen der Brennergeometrie nötigen Biegekräfte reduziert. Dabei kann ein Hebelelement (8) auf verschiedene Gegenlagerpositionen (10) aufgesetzt werden, um die Wirkrichtung der Biegekraft zu bestimmen.

## Beschreibung

Die Erfindung betrifft eine Einstellvorrichtung für Brenner, mittels der die Geometrie des Brenners auf ein fest definiertes Sollmaß gebracht wird.

Bei modernen Roboterbrennern wird eine hohe Steifigkeit des Brenners gefordert, um ein Verziehen des Brenners durch Wärmeeinwirkung oder mechanische Kollisionen möglicht klein zu halten. Trotzdem kann ein regelmäßiges Nachrichten dieser Brenner vorteilhaft sein, um bestmögliche Arbeitsergebnisse zu erhalten.

Bei heute üblichen Einstellvorrichtungen wird entweder direkt eine Verlängerung am Brennerkopf montiert, mit der der Brenner in die gewünschte Richtung gebogen werden kann. Bei einem steifen Aufbau des Brenners sind für den Richtvorgang jedoch sehr große Handkräfte nötig, welche ein präzises Richten sehr schwierig machen. Alternative Einstellvorrichtungen sind mit Stellschrauben ausgerüstet, die auf den Brenner wirken. Hier wird über das Schraubengewinde eine große Kraftverstärkung erreicht, die Bedienung dieser Vorrichtungen ist jedoch umständlich und zeitaufwändig.

Die hier beschriebene Erfindung stellt sich zum Ziel, eine manuell zu betätigende Einstellhilfe für Brenner, insbesondere Roboter-Schutzgasschweißbrenner, zu schaffen, mit der auch Brenner mit hoher Steifigkeit durch die Nutzung einer einfachen Hebelübersetzung mit wenig Kraftaufwand so gerichtet werden können, dass die Brennerspitze an einer definierten Sollposition zu liegen kommt.

Eine Lösung des Problems erfolgt durch eine Einstellvorrichtung für Brenner mit den in Anspruch 1 aufgeführten Merkmalen. Die Unteransprüche beschreiben weitere vorteilhafte Ausgestaltungen der Erfindung.

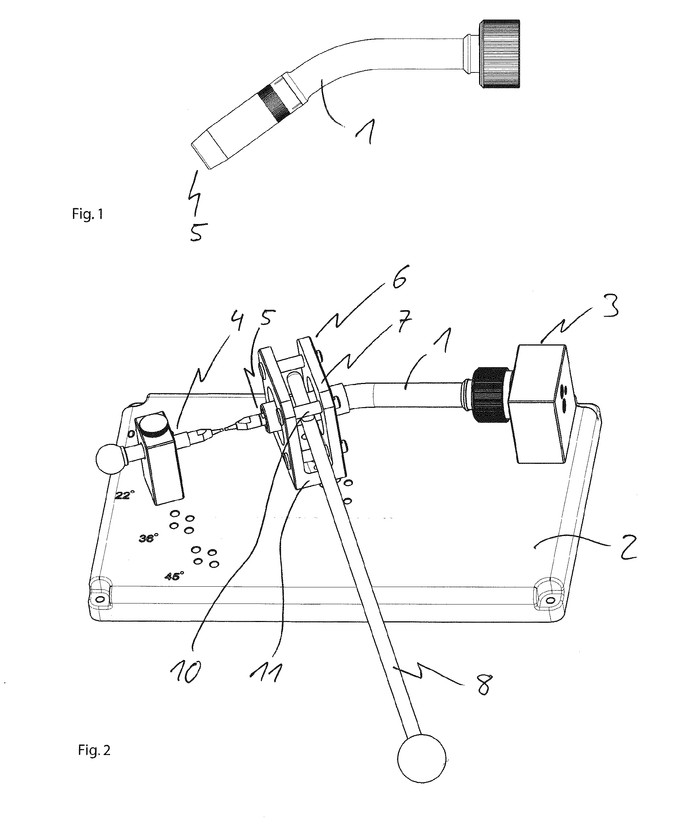

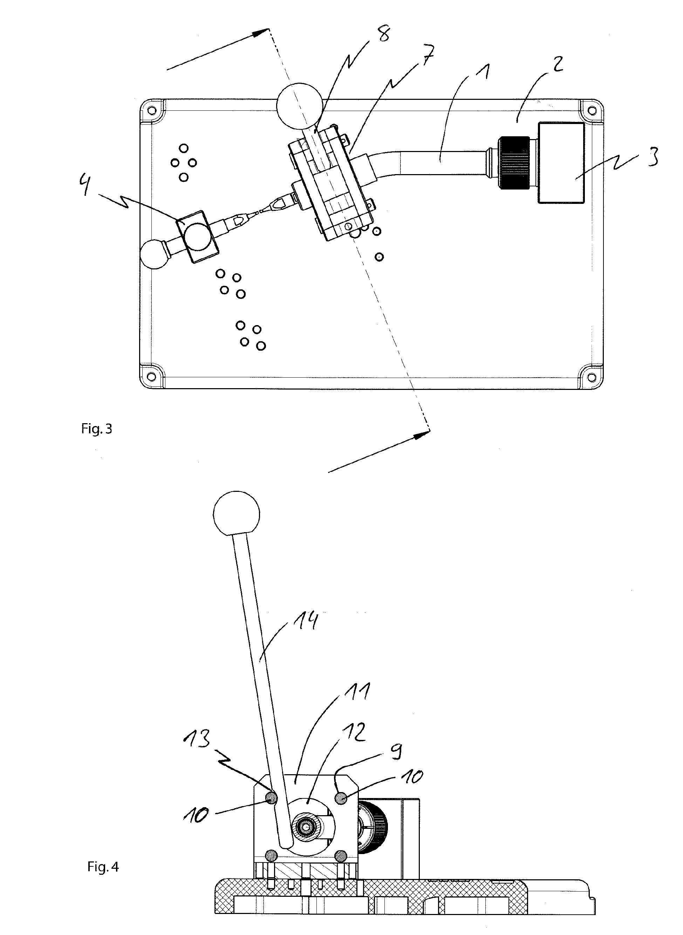

Ein Ausführungsbeispiel der Erfindung wird anhand der Figuren 2 bis 4 erläutert. Es zeigen:
Fig. 1 einen Brenner (1)
Fig. 2 eine räumliche Ansicht der erfindungsgemäßen Einstellvorrichtung mit montiertem Brenner (1) und angesetztem Einstellhebel (14). In der gezeigten Position wird eine nach unten wirkende Richtkraft auf den Brenner (1) ausgeübt.
Fig. 3 eine Aufsicht auf die Einstellvorrichtung. Der Einstellhebel (14) ist hier seitlich platziert. Die gestrichelte Linie ist die Schnittlinie für Fig. 4.
Fig. 4 Ein Schnitt durch die Einstellvorrichtung; die Ausführung des Gegenlagerelementes (7) mit 4 Bolzen (10), die als Auflageflächen (9) dienen, ist hier gut sichtbar.

Eine Ausführungsvariante der Erfindung zum Richten eines Schutzgasschweißbrenners besteht aus einer stabilen Grundplatte (2), auf die das Brenneraufnahmemittel (3), das Kontrollmittel (4) und das Gegenlagerelement (7) aufgeschraubt sind. Das Brenneraufnahmemittel (3) besteht aus einem Grundkörper, auf dem ein Aufnahmeflansch passend zum verwendeten Brennertyp befestigt ist.

Das Kontrollmittel (4) besteht aus einem Grundkörper, in dem ein Prüfdorn verschiebbar gelagert ist. Zusätzlich wird am Brenner (1) eine Prüfspitze befestigt, welche anstelle der zum Schweißen eingesetzten Stromdüse montiert wird. Wenn der Prüfdorn in Richtung Brenner (1) geschoben wird, lässt sich eine Positionsabweichung der Brennerspitze (5) von der Sollposition einfach erkennen.

Die Justiereinrichtung (6) besteht aus dem Gegenlagerelement (7) und dem Hebelelement (8). Das Gegenlagerelement (7) ist aus einem stabilen U-förmigen Grundkörper (11) aufgebaut, durch den in Querrichtung 4 Bolzen (10) gesteckt sind, welche die Auflageflächen (9) bilden. Der Grundkörper (11) weist mittig eine zentrale Öffnung (12) in Querrichtung auf, durch das der Brenner (1) durchgeführt wird. Somit befinden sich die 4 Auflageflächen (9) gleichmäßig um den Brenner (1) angeordnet. Das Hebelelement (8) ist als einfacher Hebel ausgeführt, mit einer gerundeten Einfräsung nahe einem Ende, welche als Auflagefläche (13) des Hebelelementes (8) einen Formschluss mit den 4 Bolzen (10) des Gegenlagerelementes (7) bildet. Am anderen Ende ist der Hebel zur besseren Handhabbarkeit mit einem Knauf versehen.

Die Hebellänge wird zweckmäßigerweise so gewählt, dass eine Hebelübersetzung von 1:5 bis ca. 1:10 entsteht.

Die Grundplatte (2) weist mehrere Bohrbilder auf, die eine Befestigung des Gegenlagerelementes (7) sowie des Kontrollmittels (4) an unterschiedlichen Positionen passend zum jeweils verwendeten Brenner (1) ermöglicht. Die Befestigung dieser Bauteile auf der Grundplatte (2) geschieht mittels Schrauben. Zusätzlich werden Passstifte eingesetzt, so dass eine hohe Positioniergenauigkeit dieser Elemente erreicht wird.

### Bezugszeichenliste

- 1.: Brenner
- 2.: Grundplatte
- 3.: Brenneraufnahmemittel
- 4.: Kontrollmittel
- 5.: Brennerspitze
- 6.: Justiereinrichtung
- 7.: Gegenlagerelement
- 8.: Hebelelement
- 9.: Auflagefläche
- 10.: Bolzen
- 11.: Grundkörper
- 12.: Öffnung
- 13.: Auflagefläche (am Hebelelement)
- 14.: Einstellhebel

## Patentansprüche

1. Einstellvorrichtung für Brenner, mit einer Grundplatte (2), einem Brenneraufnahmemittel (3), einem Kontrollmittel (4) für die Position der Brennerspitze (5) und einer Justiereinrichtung (6),
**dadurch gekennzeichnet,**
**dass** die Justiereinrichtung (6) aus einem Gegenlagerelement (7) und einem Hebelelement (8) besteht, und zum Richten des Brenners (1) das Hebelelement (8) so auf dem Gegenlagerelement (7) angeordnet wird, dass die Handkraft auf das Hebelelement (8) gemäss der Hebelverhältnisse verstärkt wird und diese verstärkte Kraft als Richtkraft auf den Brenner (1) wirkt.

2. Einstellvorrichtung nach Anspruch 1,
**dadurch gekennzeichnet,**
**dass** das Gegenlagerelement (7) verschiedene Auflagepositionen für das Hebelelement (8) zulässt, so dass die Richtkraft abhängig von der Wahl der Auflageposition des Hebelelementes (8) auf dem Gegenlagerelement (7) in unterschiedliche Richtungen wirkt.

3. Einstellvorrichtung nach Anspruch 2,
**dadurch gekennzeichnet,**
**dass** das Gegenlagerelement (7) 4 Auflagepositionen aufweist, wobei diese so angeordnet sind, dass die Richtkraft im wesentlichen jeweils nach vorne, hinten, oben oder unten wirkt.

4. Einstellvorrichtung nach einem der vorhergehenden Ansprüche,
**dadurch gekennzeichnet,**
**dass** das Gegenlagerelement (7) den Brenner (1) weitestgehend umschließt und es eine oder mehrere Auflageflächen (9) für ein Hebelelement (8) aufweist.

5. Einstellvorrichtung nach Anspruch 4,
**dadurch gekennzeichnet,**
**dass** die Auflageflächen (9) des Gegenlagerelementes (7) durch Bolzen (10) gebildet werden, die durch einen U-förmigen Grundkörper (11) gesteckt werden, wobei dieser Grundkörper (11) in Querrichtung eine Öffnung (12) aufweist, in der der Brenner (1) zu liegen kommt.

6. Einstellvorrichtung nach einem der vorhergehenden Ansprüche,
**dadurch gekennzeichnet,**
**dass** das Kontrollmittel (4) und die Justiereinrichtung (6) an verschiedenen vordefinierten Positionen der Grundplatte (2) befestigt werden können, um eine schnelle Anpassung der Einstellvorrichtung an verschiedene Brennergeometrien vornehmen zu können.

7. Einstellvorrichtung nach einem der vorhergehenden Ansprüche,
**dadurch gekennzeichnet,**
**dass** das Hebelelement (8) eine Auflagefläche (13) aufweist, welche einen Formschluss mit der Auflagefläche (9) des Gegenlagerelementes (7) bildet und somit einerseits eine genaue Positionierung des Hebelelements erlaubt, sowie das Abrutschen des Hebelelements verhindert.
